# FASCICULE DE BREVET EUROPEEN

(11) **EP 0 526 264 B1**
(45) Date de publication et mention de la délivrance du brevet: **31.01.1996**
(21) Numéro de dépôt: 92401668.6
(22) Date de dépôt: 16.06.1992
(51) Int. Cl.: A62D 5/00, B32B 27/12, A41D 31/00, G21F 3/02

(54) **Matériau pour vêtement de protection nucléaire, biologique et chimique**
Stoff für nukleare, biologische und chemische Schutzkleidung
Material for nuclear, biological and chemical protective clothing

(30) Priorité: 26.06.1991 FR 9107860
(43) Date de publication de la demande: 03.02.1993
(73) Titulaire: MANUFACTURE DE VETEMENTS PAUL BOYE S.A., F-34202 Sète (FR)
(72) Inventeur: Boyé, Jacques, F-34200 Sete (FR)
(74) Mandataire: Cournarie, Michèle

(56) Documents cités:
- FR-A- 2 514 934
- GB-A- 2 025 316
- US-A- 4 045 609

## Description

L'invention concerne un matériau pour vêtement de protection nucléaire, biologique et chimique, et les vêtements fabriqués à partir de celui-ci.

Les matériaux de protection contre les agressions nucléaires, biologiques et chimiques (NBC) comportent pour être efficaces plusieurs couches de matières différentes : une couche extérieure, en général de polyamide, une couche de non-tissé et une couche intérieure absorbante, généralement en mousse de polyuréthanne imprégnée de charbon actif. La couche intermédiaire en non-tissé (généralement de polyoléfine) a pour fonction d'empêcher des produits toxiques liquides de venir en contact direct avec la mousse de polyuréthanne carbonée qui absorbe, elle, les vapeurs toxiques. En outre la couche de mousse de polyuréthanne est le plus souvent contre-collée sur un tissu souple (jersey de coton ou de textile synthétique par exemple) pour qu'elle puisse venir en contact de la peau de l'utilisateur.

Alors qu'ils présentent de bonnes qualités de protection NBC, les matériaux de la technique actuelle présentent l'inconvénient d'être épais donc relativement rigides et lourds, d'où gêne pour l'utilisateur, et en outre de lui tenir très chaud, ce qui limite l'utilisation pratique de vêtements faits à partir de ces matériaux, tant en durée qu'en possibilité d'action, les travaux pénibles qui nécessitent l'usage de tels vêtements entraînant une hausse des contraintes physiologiques dont la temperature, à l'intérieur du vêtement rapidement insupportable.

US-A-4 045 609 décrit un matériau constitué d'une couche de mousse imprégnée de matériau absorbant et d'une couche supérieure en tissu, ayant subi un traitement hydrooléofuge.

FR-A-2 514 934 décrit un matériau constitué d'une couche de mousse imprégnée de charbon actif et d'une couche supérieure hydrooléofuge et ignifuge.

Or il a maintenant été trouve que l'on obtient un matériau ayant d'excellentes propriétés de protection NBC sans avoir les inconvénients des produits utilisés à l'heure actuelle, en associant directement un tissu coton/polyester de 150 à 200 g/m² ayant subi un traitement hydrooléofuge (déperlant) en tant que couche extérieure et une couche de mousse de polyuréthanne imprégnée de charbon actif contre-collée sur une étoffe formant la couche intérieure du matériau, la mousse imprégnée ayant préalablement été comprimée avant le contre collage.

L'invention concerne également les vêtements de protection fabriqués à partir du matériau précédent par couture des parties constitutives.

Le matériau pour vêtement de protection NBC est constitué uniquement
- d'une couche en coton/polyester (par exemple 65% coton et 35% polyester) ayant subi un traitement imperméabilisant classique pour lui donner un caractère déperlant (hydrooléofuge). Cette couche est une étoffe tissée d'un poids de 150 à 200 g/m²
- d'une couche de mousse de polyuréthanne imprégnée de charbon actif et contre-collée sur une étoffe. Cette couche de mousse a, après imprégnation du charbon actif, été comprimée par un procédé thermique classique de façon à obtenir un produit qui conserve toutes ses caractéristiques de protection et qui a l'avantage d'être moins épais (par exemple deux fois). Cette étoffe est de preférence en mailles et fibres naturelles, artificielles, synthétiques (nylon, polyester,...) ou mélangées (coton/polyester), et permet de porter le vêtement directement sur la peau (sans vêtement normal, ce qui est important dans le cas d'une température ambiante élevée due aux conditions climatiques ou de travail).

Jusqu'à présent il était considéré que la couche extérieure en combinaison avec un non-tissé devait présenter des propriétés d'imperméabilité aux matières toxiques que ne pouvait pas fournir un tissu coton-polyester même ayant subi un traitement hydrooléofuge.

Or on a constaté qu'un tel tissu non seulement était aussi efficace que les produits utilisés préalablement mais qu'il permet en outre de se passer de la couche intermédiaire de non-tissé.

Ceci permet d'obtenir un matériau satisfaisant aux conditions de protection NBC et présentant en outre les avantages suivants : il est plus léger et plus souple et comme il peut être porté directement sur la peau, il est particulièrement indiqué dans les atmosphères chaudes. Les essais effectués ont montré en effet qu'il tenait nettement moins chaud que les produits antérieurs. En outre, il a l'avantage supplémentaire d'être plus économique.

Divers types de vêtements de protection peuvent être fabriqués avec ce matériau : combinaisons, ensembles veste-pantalon, cagoules, chaussettes, gants. Les différentes pièces constitutives sont assemblées par couture de type point de recouvrement, ce qui assure une plus grande étanchéité et une plus grande résistance de la couture.

## Revendications

1. Matériau pour vêtement de protection nucléaire, biologique et chimique, caractérisé en ce qu'il comporte exclusivement une couche extérieure en coton/polyester de 150 à 200 g/cm² ayant subi un traitement hydrooléofuge et une couche de mousse de polyuréthanne imprégnée de charbon actif contrecollée sur une étoffe formant la couche intérieure du matériau, la mousse de polyuréthanne imprégnée de charbon actif ayant été thermiquement comprimée avant d'être contrecollée.

2. Vêtement de protection nucléaire, biologique et chimique, fabriqué à partir du matériau selon la revendication 1.

## Claims

1. Material for nuclear, biological, and chemical protection garments, characterized in that it comprises solely an outside cotton/polyester layer of 150 to 200g/cm² which has been subjected to a water- and oil-repellant treatment, and a layer of polyurethane foam impregnated with active carbon and bonded to a base fabric that forms the inside layer of the material, with the polyurethane foam impregnated with active carbon having been thermally compressed before being bonded to the base fabric.

2. A nuclear, biological, and chemical protection garment, made from the material of claim 1.

## Patentansprüche

1. Material für nukleare, biologische und chemische Schutzkleidung, dadurch gekennzeichnet, daß sie ausschließlich eine wasser-ölabweisend behandelte äußere Schicht aus Baumwolle/Polyester mit 150 bis 200g/cm² und eine mit Aktivkohle durchsetzte Schicht aus Polyurethanschaum, die auf einem die innere Schicht des Materials bildenden Stoff kaschiert ist, aufweist, wobei der mit Aktivkohle durchsetzte Polyurethanschaum vor dem Aufkaschieren thermisch komprimiert worden ist.

2. Kleidungsstück für nuklearen, biologischen und chemischen Schutz, das aus dem Material nach Anspruch 1 hergestellt ist.
